(19) Europäisches Patentamt

European Patent Office

Office européen des brevets

(11) **EP 1 285 833 B1**

(12) **EUROPEAN PATENT SPECIFICATION**

(45) Date of publication and mention
of the grant of the patent:
**13.09.2006 Bulletin 2006/37**

(51) Int Cl.:
***B60T 8/00*** (2006.01)

(21) Application number: **02078090.4**

(22) Date of filing: **29.07.2002**

(54) **Systems and method incorporating dynamic feedforward for integrated control of motor vehicle steering and braking**

Verfahren und Vorrichtung mit dynamischer Vorwärtssteuerung zur integrierten Lenk- und Bremssteuerung eines Kraftfahrzeugs

Procédé et dispositif avec une commande à action directe pour contrôle intégré de frein et de virage d'un véhicule automobile

(84) Designated Contracting States:
**DE FR GB IT**

(30) Priority: **22.08.2001 US 935274**
**29.08.2001 US 315591 P**
**13.11.2001 US 8251**

(43) Date of publication of application:
**26.02.2003 Bulletin 2003/09**

(73) Proprietor: **Delphi Technologies, Inc.**
**Troy, MI 48007 (US)**

(72) Inventors:
• **CHANDY, Ashok**
**Fenton, MI 48430 (US)**
• **CHEN, Hsien Heng**
**Troy, MI 48098 (US)**

(74) Representative: **Denton, Michael John**
**Delphi European Headquarters,**
**64 avenue de la Plaine de France,**
**Paris Nord II,**
**BP 60059, Tremblay-en-France**
**95972 Roissy Charles de Gaulle Cédex (FR)**

(56) References cited:
EP-A- 0 663 333          WO-A-01/19653
US-A- 5 448 481          US-A- 5 606 502
US-A- 5 957 987          US-A- 6 131 688

**Description**

TECHNICAL FIELD

The present invention relates to control systems for motor vehicle subsystems, and more particularly to a system and method including a dynamic feedforward feature for integrated control of the motor vehicle steering and brakes.

BACKGROUND OF THE INVENTION

Unified or integrated chassis control systems have been proposed which control the brakes, steering, and suspension of a motor vehicle. The purpose of unified chassis control is to improve vehicle performance in all driving conditions by coordinating control of the chassis subsystems. Unified chassis control systems typically utilize a supervisory control concept that utilizes three fundamental blocks: a reference model, a state estimator, and a vehicle control. The vehicle control element normally incorporates a feedback control. This element computes control values by comparing actual states obtained from the state estimator with desired states from the reference model.

It is well known that when brakes are applied during a steering maneuver, a yaw rate error is induced. It such circumstances, the conventional chassis control systems are relatively slow to compensate.

US 5,606,502 discloses a steering angle control system including a feed-forward control for producing a desired vehicle motion variable and a feedback control for suppressing disturbances. A controller calculates a corrected steering angle from a detected steering angle and a premeasured characteristic of a steering system. The desired vehicle motion variable is calculated from a vehicle speed and the corrected steering angle. The feedback control is executed according to the difference between the desired and detected vehicle motion variables and accounts for a compensation of a non-linear characteristic of the steering system.

US 6,131,688 discloses a driftout control device of a four wheel steered vehicle having a brake/traction system for selectively applying a braking or a traction force to each of the four wheels, and a steering system for selectively steering a pair of front and a pair of rear wheels separately, wherein the driftout control device includes a first controller for controlling the brake/traction system so as selectively to generate a turn assist yaw moment in the vehicle, and a second controller for controlling the steering system so as selectively to steer the pair of rear wheels in a same steering direction as a steering of the pair of front wheels for a turn running of the vehicle when the first controller is controlling the brake/traction system for generation of the turn assist yaw moment, so that an anti-turn yaw moment generated by the rear wheels steered in the same direction as the front wheels is cancelled by an increased generation of the turn assist yaw moment, while ensuring a larger centripetal side force at the rear wheels to suppress the driftout.

SUMMARY OF THE INVENTION

The present invention is a system and method for controlling a motor vehicle subsystem. The control system comprises a reference model and a feedforward controller. The reference model computes desired states of the subsystem. The feedforward controller computes a first control value based on input from the reference model, and computes a second control value based on yaw rate of the vehicle and a control variable for the subsystem.

Accordingly, it is an object of the present invention to provide a control system of the type described above which presents a standard methodology to integrate feedforward control into a unified chassis control supervisor that overcomes several known deficiencies, by improving control response, by allowing single-point tuning and by incorporating dynamic feedforward logic.

The foregoing and other features and advantages of the invention will become further apparent from the following detailed description of the presently preferred embodiments, read in conjunction with the accompanying drawings. The detailed description and drawings are merely illustrative of the invention rather than limiting, the scope of the invention being defined by the appended claims and equivalents thereof.

BRIEF DESCRIPTION OF THE DRAWINGS

The present invention will now be described, by way of example, with reference to the accompanying drawings, in which:

Figure 1 is a schematic view of a chassis control system according to the present invention for a motor vehicle;
Figure 2 is a block diagram of a dynamic feedforward control system using a first-order reference model; and
Figure 3 is a block diagram of a dynamic feedforward control system using a second-order reference model.

## DESCRIPTION OF THE PREFERRED EMBODIMENTS

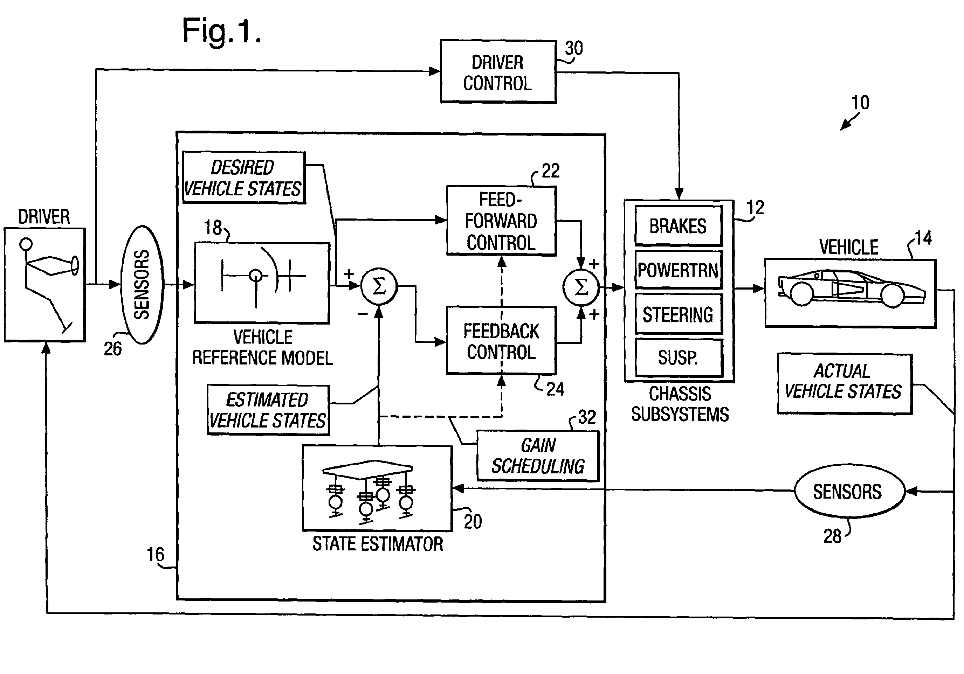

**FIG. 1** shows a control system **10** according to the present invention for chassis subsystems **12** of a motor vehicle **14**. The chassis subsystems may include front and/or rear steering and braking. A supervisory controller **16** performs many estimation and control functions conventionally performed by the subsystems themselves. The supervisory controller **16** includes a reference model **18**, an estimator **20** of vehicle state and environment, and a vehicle level controller including a feedforward controller **22** and a feedback controller **24**.

The reference model **18** determines the desired vehicle response, in terms of measureable variables, to driver inputs using measured inputs from sensors **26** and some estimates. The estimator **20** uses measured inputs such as from sensors **26**, measured outputs such as from sensors **28**, and some preliminary estimates from individual modules to generate estimates of vehicle states which are not measured directly. The estimator **20** may also estimate variables describing potentially relevant environmental effects such as surface coefficient of adhesion, bank angle of the road surface, roughness of the road surface, and others. The supervisory controller **16** uses the desired, measured and estimated values to determine the corrective action on the vehicle level, for example moments and forces acting on the vehicle, that will bring the vehicle response into conformance with the desired response. The supervisory controller **16** also performs partition of control among the subsystems **12**. Thus, the supervisory controller **16** decides whether and to what extent to activate any subsystem(s) in a given situation.

The feedforward controller **22** computes a control value based on input from the reference model **18**. The present invention optionally provides a driver to chassis-subsystem transfer function **30**. In the case of steering, this could represent the transfer function between steering wheel position and road wheel position. In the case of braking, this could represent the transfer function between pedal force and caliper forces at each of the braked wheels of the motor vehicle. This transfer function can be included in the feedforward and feedback control design. For suspension systems, however, this block does not exist. It should be noted that the lines on the block diagram in **FIG. 1** show primary control paths. In reality, due to the non-linear nature of vehicle dynamics, the present invention contemplates other links such as bank angle from the state estimator **20** to the feedforward controller **22**. A control term based on the driver inputs (inputs to the reference model) are also appropriate and fit the definition of feedforward control.

A dynamic feedforward control is represented by line **32**. The dynamic feedforward control is determined by the vehicle yaw-plane dynamics, which can be described by equations using variables for rearwheel steer $\Delta\delta_r$ (if present), front active steer $\Delta\delta_{fc}$, and differential brake $\Delta F_b$ systems. The two degrees-of-freedom bicycle model is described by:

$$\dot{X}_p = A_p X_p + D_f \theta + D_r \Delta\delta_r + D_{fc}\Delta\delta_{fc} + B_p \Delta F_b$$

$$A_p = \begin{bmatrix} a_{11} a_{12} \\ a_{21} a_{22} \end{bmatrix}; B_p = \begin{bmatrix} b_{p1} \\ 0 \end{bmatrix}; D_f = \begin{bmatrix} b_{f1} \\ b_{f2} \end{bmatrix}; D_r = \begin{bmatrix} b_{r1} \\ b_{r2} \end{bmatrix}; D_{fc} = \begin{bmatrix} b_{fc1} \\ b_{fc2} \end{bmatrix}$$

$$X_p = \begin{bmatrix} \dot{\varphi} \\ V_y \end{bmatrix}$$

where $\varphi$ and $V_y$ are the vehicle yaw rate and side slip velocity, respectively, and the system coefficients, $a_{ij}$'s($i$ = 1,2; $j$ = 1,2) ,$b_{fi}$'s,$b_{ri}$'s,$b_{fci}$'s,$b_{p1}$ are functions of vehicle mass $M$ , vehicle speed $V_x$, vehicle inertia $I_z$, front and rear cornering stiffness $C_f C_r$, vehicle track width, $t_w$, and the location of vehicle center of gravity described by parameters $a$ and $b$ :

$$a_{11} = \frac{-(a^2 C_f + b^2 C_r)}{I_z V_x}$$

$$a_{12} = \frac{-aC_f + bC_r}{I_z V_x}$$

$$a_{21} = \frac{-aC_f + bC_r}{MV_x} - V_x$$

$$a_{22} = \frac{-(C_f + C_r)}{MV_x}$$

$$b_{r1} = \frac{-bC_r}{I_z}; b_{r2} = \frac{C_r}{M}$$

$$b_{fc1} = \frac{aC_f}{I_z}; b_{fc2} = \frac{C_f}{M}$$

$$b_{p1} = \frac{t_w}{I_z}$$

$$b_{f1} = \frac{aC_f}{I_z}; b_{f2} = \frac{C_f}{M}$$

The actual yaw rate φ of the vehicle 14 measured by the sensors 28 is mathematically stated from **FIG. 1** as $\varphi = P_1\theta + P_2 G_s [G_{ff}\varphi_r + G_{fb}(\varphi - \varphi_r)]$. The transfer function to relate the yaw rate, φ, to the road wheel angle, θ, is expressed as

$$P_1 = \frac{\dot{\varphi}}{\theta} = \frac{b_{f1}s + a_{12}b_{f2} - a_{22}b_{f1}}{s^2 - (a_{11} + a_{12})s + a_{11}a_{22} - a_{12}a_{21}}$$

The variable $P_2$ represents the transfer function to relate the yaw rate to the control variables for the rear steer (if present), front active steer, and braking systems. The variables $G_{ref}$, $G_{ff}$, $G_{fb}$, $G_s$ respectively represent the transfer functions for the desired reference model, the feedforward control, the feedback control, and the actuator dynamics shown in **FIG. 1.**
Assuming that the yaw rate is equal to the desired yaw rate $\varphi_r$, the last equation above can be rewritten as $(1 - P_2 G_S G_{ff})\varphi_r = P_1\theta$. Assuming further that $\varphi_r = G_{ref}\theta$, the general dynamic feedforward transfer function is given by

$$G_{ff} = P_2^{-1}G_S^{-1}[1 - G_{ref}^{-1}P_1].$$

## Rear Steer System

The transfer function to relate the yaw rate to the rear road wheel angle control, if present, is given by

$$P_2 = \frac{\dot{\varphi}}{\Delta \delta_r} = \frac{b_{r1}s + a_{12}b_{r2} - a_{22}b_{r1}}{s^2 - (a_{11} + a_{12})s + a_{11}a_{22} - a_{12}a_{21}}$$

If the desired yaw rate (or reference model) is represented as a first-order transfer function as

$$G_{ref} = \frac{K_d}{\tau_d s + 1}$$

where

$$K_d = \frac{V_x}{L + K_\mu V_x^2}$$

where the variables $K_\mu, L$ respectively represent the understeer coefficient and vehicle length, then the dynamic feed-forward part of the rear steer control is given by

$$\Delta \delta_r = G_{ff} G_{ref} \theta$$

Where

$$G_{ff} = G_p + \frac{G_i}{s - a_{33}} + G_d s$$

And

$$G_p = (-a_{11} - a_{22} - \frac{\tau_d b_{f2}}{k_d}a_{12} + \frac{\tau_d b_{f1}}{k_d}a_{22} + G_d b_{r1}a_{33} - \frac{b_{f1}}{k_d})/b_{r1}$$

$$G_i = (-\frac{b_{f2}}{k_d}a_{12} + \frac{b_{f1}}{k_d}a_{22} + a_{11}a_{22} - a_{12}a_{21} + b_{r1}G_p a_{33})/b_{r1}$$

$$G_d = (1 - \frac{\tau_d b_{f1}}{k_d})/b_{r1}$$

$$a_{33} = \frac{a_{22}b_{r1} - a_{12}b_{r2}}{b_{r1}}$$

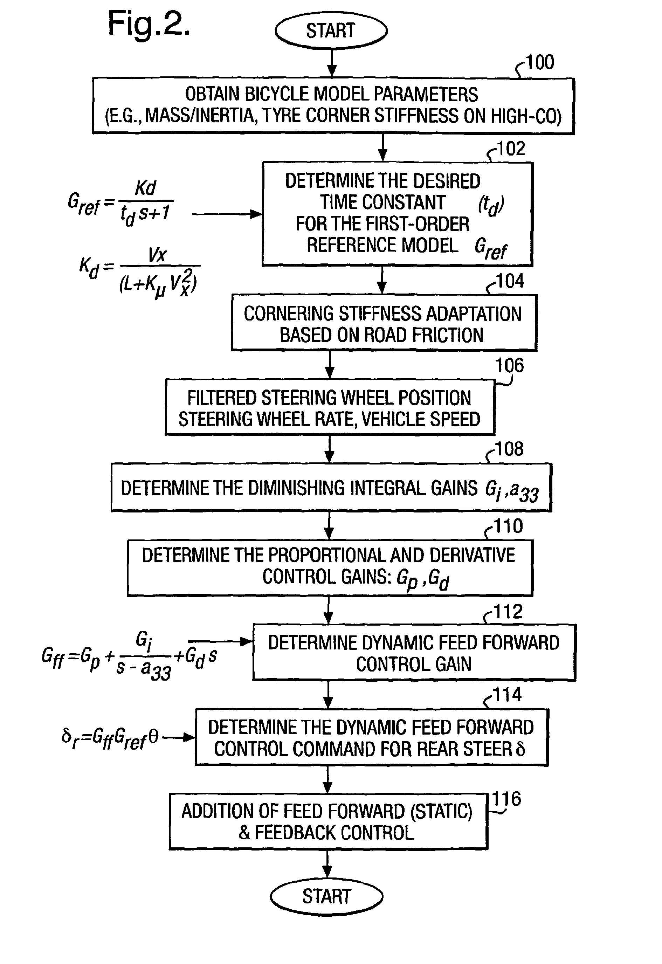

The dynamic feedforward control with a proportional term, a derivative term, and a diminishing integrator term of the steering wheel position is employed to achieve the desired dynamic feedforward control function. **FIG. 2** shows a dynamic feedforward control method for a rear steer application assuming a first-order transfer function. The bicycle model parameters are first obtained at block **100,** and then at block **102** the desired time constant $\tau_d$ is determined according to the equations discussed previously. A cornering stiffness adaptation based on an estimate of road friction is then performed at **104,** followed by filtering the steering wheel position, the steering wheel rate, and the vehicle speed as shown by block **106.** The diminishing integral gains $G_i$ and $a_{33}$ are then determined at block **108,** and the proportional and derivative control gains $G_p$ and $G_d$, respectively, determined at block **110.** At block **112,** the dynamic feedforward control gain is determined according to the equation discussed above. The dynamic feedforward control command for the rear steer system is then determined at block **114.** Finally, the static feedforward and feedback controls are added at block **116** to the dynamic feedforward control to obtain the total steering control command. The dynamic feedforward control gains can be represented as four separate table lookups. For example, when the first-order time constant is assumed to be 0.05 seconds, the proportional, the diminishing integral, and the derivative control gains are plotted as a function of vehicle speed and stored in a computer memory.

If the reference model is modeled as a second-order transfer function as

$$G_{ref\_2nd} = K_d \frac{\omega_d^2(1 + T_1 s)}{s^2 + 2\zeta_d \omega_d s + \omega_d^2}$$

then the dynamic feedforward term of the rear steer control becomes

$$G_{ff\_2nd} = \frac{a_1 s^3 + a_2 s^2 + a_3 s + a_4}{b_1 s^2 + b_2 s + b_3}$$

and the rear steer control associated with the dynamic feedforward term is given by

$$\Delta\delta_r = G_{ff\_2nd} G_{ref\_2nd} \theta$$

The parameters of the second-order transfer function are:

$$a_1 = T_1 - \frac{b_{f1}}{k_d \omega_d^2}$$

$$a_2 = 1 - T_1 a_7 - \frac{2\zeta_d b_{f1}}{k_d \omega_d} + \frac{a_{22} b_{f1} - a_{12} b_{f2}}{k_d \omega_d^2}$$

$$a_3 = -a_7 + T_1 a_5 + \frac{2\zeta_d}{k_d \omega_d} a_6 - \frac{b_{f1}}{k_d}$$

$$a_4 = a_5 + \frac{a_6}{k_d}$$

$$a_5 = a_{11}a_{22} - a_{12}a_{21}$$

$$a_6 = a_{22}b_{f1} - a_{12}b_{f2}$$

$$a_7 = a_{11} + a_{22}$$

$$b_1 = T_1 b_{r1}$$

$$b_2 = b_{r1} - T_1(a_{22}b_{r1} - a_{12}b_{r2})$$

$$b_3 = a_{12}b_{r2} - a_{22}b_{r1}$$

$$T_1 = \frac{b_{f1}}{a_{12}b_{f2} - a_{22}b_{f1}}$$

The variables $\omega_d$ and $\xi_d$ are the desired natural frequency and damping ratio, which can be defined in the reference model using a single-point tuning approach, to enhance the transient handling performance of the rear steer system.

The dynamic feedforward transfer function $G_{ff\_2nd}$ can be rearranged as the summation of a proportional term, a differential term, and a second-order term as:

$$G_{ff\_2nd} = G_{p\_2nd} + G_{d\_2nd}s + K_p \frac{\omega_p^2(1 + T_2 s)}{s^2 + 2\zeta_p \omega_p s + \omega_p^2}$$

Where

$$G_{p\_2nd} = \frac{a_2 b_1 - a_1 b_2}{b_1^2}$$

And

$$G_{d\_2nd} = \frac{a_1}{b_1}$$

$$k_p = \frac{d_2}{b_3}$$

$$\varpi_p = \sqrt{\frac{b_3}{b_1}}$$

$$\xi_p = \frac{b_2}{2b_1\omega_n}$$

$$T_2 = \frac{d_1}{d_2}$$

$$d_1 = a_3 - (\frac{a_1 b_3 + a_2 b_2}{b_1}) + \frac{a_1 b_2^2}{b_1^2}$$

$$d_2 = a_4 - \frac{a_1 b_3}{b_1} + \frac{a_1 b_2 b_3}{b_1^2}$$

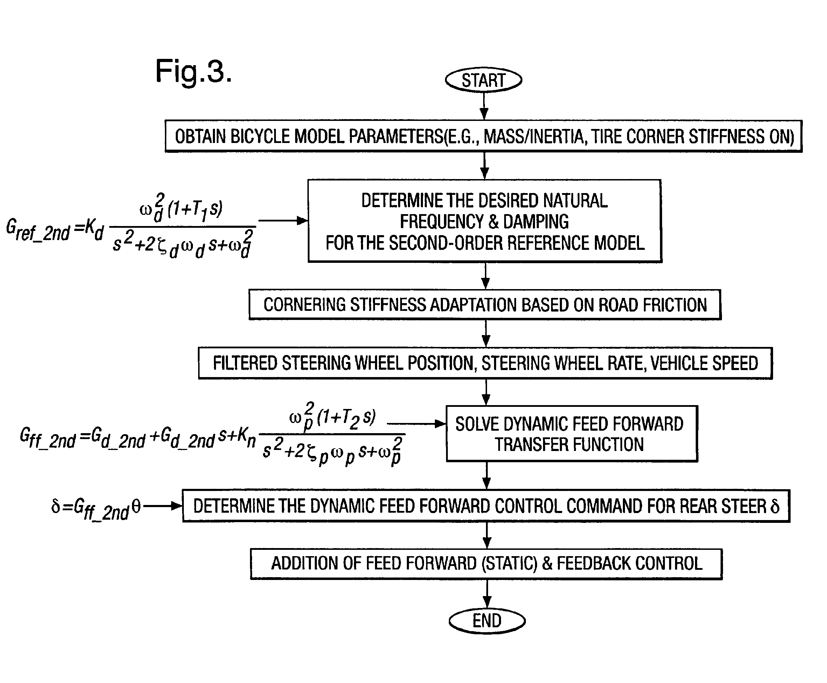

The vehicle's natural frequency and damping ratio are preferably generally decreased as the vehicle speed is increased. An advantage of the second-order transfer function is that it allows a driver to choose a desired handling characteristic of a vehicle. **FIG. 3** shows the dynamic feedforward control for the rear steer system assuming a second-order reference model. The dynamic feedforward control command can be represented as the summation of a proportional term, a differential term, and an integral term with a second-order transfer function as given above. The dynamic feedforward control gains can be represented as four separate table lookups. For example, when a vehicle handling characteristic with a desired natural frequency of 1.5
Hz and a desired damping ratio of 1.5 are specified, the control gains are represented as a function of vehicle speed and stored in the computer memory. The total rear steer control command is the summation of the static feedforward, the dynamic feedforward, and the feedback control.

**Front Active Steer System**

The transfer function to relate the yaw rate to the front active steering control is given by:

$$P_2 = \frac{\dot{\varphi}}{\Delta\delta_{fc}} = \frac{b_{fc1}s + a_{12}b_{fc2} - a_{22}b_{fc1}}{s^2 - (a_{11} + a_{12})s + a_{11}a_{22} - a_{12}a_{21}}$$

If the reference model is represented as a first-order transfer function, then the dynamic feedforward part of the front active steering control is given by:

$$\Delta\delta_{fc} = G_{ff} G_{ref} \theta$$

$$G_{ff} = G_p + \frac{G_i}{s - a_{33}} + G_d s$$

*Where*

$$G_p = (-a_{11} - a_{22} - \frac{\tau_d b_{f2}}{k_d}a_{12} + \frac{\tau_d b_{f1}}{k_d}a_{22} + G_d b_{fc1} a_{33} - \frac{b_{f1}}{k_d}) / b_{fc1}$$

$$G_i = (-\frac{b_{f2}}{k_d} a_{12} + \frac{b_{f1}}{k_d} a_{22} + a_{11}a_{22} - a_{12}a_{21} + b_{fc1}G_p a_{33})/b_{fc1}$$

$$G_d = (1 - \frac{\tau_d b_{f1}}{k_d})/b_{fc1}$$

$$a_{33} = \frac{a_{22}b_{fc1} - a_{12}b_{fc2}}{b_{fc1}}$$

**Active Braking System**

The transfer function to relate the yaw rate to the active brake control is given by

$$P_2 = \frac{\dot{\varphi}}{\Delta F_b} = \frac{b_{p1}(s - a_{22})}{s^2 - (a_{11} + a_{12})s + a_{11}a_{22} - a_{12}a_{21}}$$

If the reference model is represented as a first-order transfer function, then the dynamic feedforward part of the active brake control is given by:

$$\Delta F_b = G_{ff} G_{ref} \theta$$

$$G_{ff} = G_p + \frac{G_i}{s - a_{22}} + G_d s$$

*Where*

$$G_p = -(a_{11} + \frac{\tau_d b_{f2}}{k_d} a_{12} + \frac{b_{f1}}{k_d})/b_{p1}$$

$$G_i = -\frac{a_{12}}{b_{p1}}[a_{21} + \frac{b_{f2}}{k_d}(1 + a_{22}\tau_d)]$$

$$G_d = (1 - \frac{\tau_d b_{f1}}{k_d})/b_{p1}$$

The vehicle's transient handling performance, such as during step steer or slalom maneuvering, can be enhanced by choosing the natural frequency and damping ratio of the vehicle's reference model with a single point tuning approach. The dynamic feedforward control of the active steering and braking integration can be tuned to provide either a first-order or a second-order desired reference model behavior, which is a great benefit in systematically tuning the vehicle to a desired level of handling performance. The addition of dynamic feedforward control reduces the lag in vehicle yaw rate and lateral acceleration responses to steering inputs and enhances the vehicle's directional stability performance as compared to the static feedforward control alone. Furthermore, the feedforward control can provide many of the system dynamics benefits and tunability function if the closed-loop control system is disabled due to failure of, e.g., yaw rate or lateral acceleration sensors.

**Claims**

1. A control system (10) for use in a vehicle (14) and for affecting a yaw rate signal provided to a motor vehicle subsystem (12) which comprises a braking subsystem and a front and/or rear wheel steering subsystem, the control system (10) comprising
a reference model (18) being adapted to compute desired states of the subsystem (12);
a state estimator which estimates actual states of the vehicle;
controller means (22, 24),
including a feedforward controller (22) being adapted to compute a first steering subsystem control value and a first braking subsystem control value based on input from the reference model (18) reflecting a desired state of the braking subsystem;
and a feedback controller (24) being adapted to compute a second steering subsystem control value and a second braking subsystem control value based on a yaw rate of the vehicle and a control variable for the subsystem by comparing the estimates of actual states with desired states;
and means for affecting the braking system and the front and/or rear wheel steering system based on said first and second steering and braking subsystem control values.

2. The control system of claim 1 wherein the first steering subsystem control value is a function of vehicle speed.

3. The control system of claim 1 wherein the first steering subsystem control value is a function of an estimate of surface friction.

4. The control system of claim 1 wherein the second steering subsystem control value is a function of proportional, derivative, and diminishing integrator terms.

5. The control system of claim 1 wherein the second steering subsystem control value is a function of steering wheel position.

6. A method of controlling steering and braking subsystems of a motor vehicle, the method comprising:

computing desired states of the steering and braking subsystems;
estimating actual states of the vehicle;
computing a first, feedforward steering subsystem control value based on the desired state of the steering subsystem;
computing a first, feedforward braking subsystem control value based on the desired state of the braking subsystem;
computing a second, feedback steering subsystem control value based on a yaw rate of the vehicle and a control variable for the steering subsystem;
computing a second, feedback braking subsystem control value based on a yaw rate of the vehicle and a control variable for the braking subsystem;

wherein computing said second steering and braking subsystem control value is based on a comparison of said estimates of actual states and said desired states and
affecting the steering and braking subsystem based on the first steering subsystem control value, the first braking subsystem control value, the second steering subsystem control value and second braking subsystem control value.

7. The method of claim 6 wherein the first braking subsystem control value is a function of proportional, derivative, and diminishing integrator terms.

8. The method of claim 6 further comprising estimating actual states of the vehicle.

**9.** The method of claim 6 further comprising a computing a third control value by comparing the estimates of actual states with desired states.

**10.** The method of claim 6 wherein the first control value is a function of vehicle speed and an estimate of surface friction.

**11.** The method of claim 6 wherein the second control value is a function of steering wheel position.

**Patentansprüche**

**1.** Steuersystem (10) zur Verwendung in einem Fahrzeug (14) und zum Beeinflussen eines Giergeschwindigkeitssignals, das für ein Kraftfahrzeug-Teilsystem (12), das ein Brems-Teilsystem und ein Vorderrad- und/oder Hinterradlenk-Teilsystem umfasst, vorgesehen ist,
wobei das Steuersystem (10) umfasst:

ein Referenzmodell (18), das Sollzustände des Teilsystems (12) berechnen kann;
eine Zustandsschätzeinrichtung, die Istzustände des Fahrzeugs schätzt;
Steuer- und Regelmittel (22, 44), mit:

einem Feedforward-Regler (22), der einen ersten Lenk-Teilsystem-Stellwert und einen ersten Brems-Teilsystem-Stellwert anhand einer Eingabe von dem Referenzmodell (18), die einen Sollzustand des Brems-Teilsystems widerspiegelt, berechnen kann; und
einem Feedback-Regler (24), der einen zweiten Lenk-Teilsystem-Stellwert und einen zweiten Brems-Teilsystem-Stellwert anhand der Giergeschwindigkeit des Fahrzeugs und einer Steuervariablen für das Teilsystem durch Vergleichen der Schätzwerte von Istzuständen mit Sollzuständen berechnen kann; und

Mittel zum Beeinflussen des Bremssystems und des Vorderrad- und/oder Hinterradlenksystems anhand der ersten und der zweiten Lenk- und Brems-Teilsystem-Stellwerte.

**2.** Steuersystem nach Anspruch 1, bei dem der erste Lenk-Teilsystem-Stellwert eine Funktion der Fahrgeschwindigkeit ist.

**3.** Steuersystem nach Anspruch 1, bei dem der erste Lenk-Teilsystem-Stellwert eine Funktion eines Schätzwerts der Oberflächenreibung ist.

**4.** Steuersystem nach Anspruch 1, bei dem der zweite Lenk-Teilsystem-Stellwert eine Funktion von Proportional-, Differential- und abschwächenden Integralausdrücken ist.

**5.** Steuersystem nach Anspruch 1, bei dem der zweite Lenk-Teilsystem-Stellwert eine Funktion der Lenkradstellung ist.

**6.** Verfahren zum Steuern von Lenk- und Brems-Teilsystemen eines Kraftfahrzeugs, wobei das Verfahren umfasst:

Berechnen von Sollzuständen der Lenk- und Brems-Teilsysteme;
Schätzen von Istzuständen des Fahrzeugs;
Berechnen eines ersten Feedforward-Stellwerts für das Lenk-Teilsystem anhand des Sollzustands des Lenk-Teilsystems;
Berechnen eines ersten Feedforward-Stellwerts für das Brems-Teilsystem anhand des Sollzustands des Brems-Teilsystems;
Berechnen eines zweiten Feedback-Stellwerts für das Lenk-Teilsystem anhand der Giergeschwindigkeit des Fahrzeugs und einer Steuervariablen für das Lenk-Teilsystem;
Berechnen eines zweiten Feedback-Stellwerts für das Brems-Teilsystem anhand der Giergeschwindigkeit des Fahrzeugs und einer Steuervariablen für das Brems-Teilsystem,

wobei das Berechnen des zweiten Lenk-Teilsystem-Stellwerts und des zweiten Brems-Teilsystem-Stellwerts auf einem Vergleich der Schätzwerte von Istzuständen mit den Sollzuständen basiert; und
Beeinflussen des Lenk-Teilsystems und des Brems-Teilsystems auf der Grundlage des ersten Lenk-Teilsystem-Stellwerts, des ersten Brems-Teilsystem-Stellwerts, des zweiten Lenk-Teilsystem-Stellwerts und des zweiten Brems-Teilsystem-Stellwerts.

7. Verfahren nach Anspruch 6, bei dem der erste Brems-Teilsystem-Stellwert eine Funktion von Proportional-, Differential- und abschwächenden Integralausdrücken ist.

8. Verfahren nach Anspruch 6, das ferner das Schätzen von Istzuständen des Fahrzeugs umfasst.

9. Verfahren nach Anspruch 6, das ferner das Berechnen eines dritten Stellwerts durch Vergleichen der Schätzwerte von Istzuständen mit Sollzuständen umfasst.

10. Verfahren nach Anspruch 6, bei dem der erste Stellwert eine Funktion der Fahrgeschwindigkeit und eines Schätzwerts der Oberflächenreibung ist.

11. Verfahren nach Anspruch 6, bei dem der zweite Stellwert eine Funktion der Lenkradstellung ist.

**Revendications**

1. Système de commande (10) pour utilisation dans un véhicule (14) et pour agir sur un signal de taux de lacet transmis à un sous-système de véhicule automobile (12) qui comprend un sous-système de freinage et un sous-système de direction des roues avant et/ou arrière,
le système de commande (10) comportant
un modèle de référence (18) conçu pour calculer les états désirés du sous-système (12) ;
un estimateur d'état qui évalue les états réels du véhicule;
des moyens de commande (22, 24),
comportant une commande à action directe (22) conçue pour calculer une première valeur de commande du sous-système de direction et une première valeur de commande du sous-système de freinage sur la base d'une grandeur d'entrée émise par le modèle de référence (18) reflétant un état désiré du sous-système de freinage ;
et une commande à rétroaction (24) conçue pour calculer une seconde valeur de commande du sous-système de direction et une seconde valeur de commande du sous-système de freinage sur la base d'un taux de lacet du véhicule et d'une variable de commande du sous-système en comparant les estimations des états réels avec les états désirés ;
et des moyens pour agir sur le système de freinage et le système de direction des roues avant et/ou arrière sur la base desdites premières et secondes valeurs de commande du sous-système de direction et de freinage.

2. Système de commande selon la revendication 1 dans lequel la première valeur de commande du sous-système de direction est fonction de la vitesse du véhicule.

3. Système de commande selon la revendication 1 dans lequel la première valeur de commande du sous-système de direction est fonction d'une estimation de l'adhérence.

4. Système de commande selon la revendication 1 dans lequel la seconde valeur de commande du sous-système de direction est fonction de termes proportionnel, dérivateur, et intégrateur d'atténuation.

5. Système de commande selon la revendication 1 dans lequel la seconde valeur de commande du sous-système de direction est fonction de la position des roues directrices.

6. Un procédé de commande des sous-systèmes de direction et de freinage d'un véhicule automobile, le procédé consistant à :

calculer les états désirés des sous-systèmes de direction et de freinage ;
estimer les états réels du véhicule ;
calculer une première valeur de commande à action directe du sous-système de direction basée sur l'état désiré du sous-système de direction ;
calculer une première valeur de commande à action directe du sous-système de freinage basée sur l'état désiré du sous-système de freinage ;
calculer une seconde valeur de commande par rétroaction du sous-système de direction basée sur un taux de lacet du véhicule et une variable de commande du sous-système de direction ;
calculer une seconde valeur de commande par rétroaction du sous-système de freinage basée sur un taux de lacet du véhicule et une variable de commande du sous-système de freinage ;

dans lequel le calcul de ladite seconde valeur de commande du sous-système de direction et de freinage est basée sur une comparaison desdites estimations des états réels et desdits états désirés, et

agir sur le sous-système de direction et de freinage sur la base de la première valeur de commande du sous-système de direction, la première valeur de commande du sous-système de freinage, la seconde valeur de commande du sous-système de direction et la seconde valeur de commande du sous-système de freinage.

7. Procédé selon la revendication 6 dans lequel la première valeur de commande du sous-système de freinage est fonction de termes proportionnel, dérivateur, et intégrateur d'atténuation.

8. Procédé selon la revendication 6 consistant, en outre, à estimer les états réels du véhicule.

9. Procédé selon la revendication 6 consistant, en outre, à calculer une troisième valeur de commande en comparant les estimations des états réels avec les états désirés.

10. Procédé selon la revendication 6 dans lequel la première valeur de commande est fonction de la vitesse du véhicule et d'une estimation de l'adhérence.

11. Procédé selon la revendication 6 dans lequel la seconde valeur de commande est fonction de la position des roues directrices.

# Fig.1.

EP 1 285 833 B1

## Fig.2.

$$G_{ref} = \frac{Kd}{t_d s + 1}$$

$$K_d = \frac{Vx}{(L + K_\mu V_x^2)}$$

START

OBTAIN BICYCLE MODEL PARAMETERS
(E.G., MASS/INERTIA, TYRE CORNER STIFFNESS ON HIGH-CO) — 100

DETERMINE THE DESIRED
TIME CONSTANT $(t_d)$
FOR THE FIRST-ORDER
REFERENCE MODEL $G_{ref}$ — 102

CORNERING STIFFNESS ADAPTATION
BASED ON ROAD FRICTION — 104

FILTERED STEERING WHEEL POSITION
STEERING WHEEL RATE, VEHICLE SPEED — 106

DETERMINE THE DIMINISHING INTEGRAL GAINS $G_i, a_{33}$ — 108

DETERMINE THE PROPORTIONAL AND DERIVATIVE
CONTROL GAINS: $G_p, G_d$ — 110

$$G_{ff} = G_p + \frac{G_i}{s - a_{33}} + \overline{G}_d s$$

DETERMINE DYNAMIC FEED FORWARD
CONTROL GAIN — 112

$$\delta_r = G_{ff} G_{ref} \theta$$

DETERMINE THE DYNAMIC FEED FORWARD
CONTROL COMMAND FOR REAR STEER $\delta$ — 114

ADDITION OF FEED FORWARD (STATIC)
& FEEDBACK CONTROL — 116

START

# Fig.3.

START

↓

OBTAIN BICYCLE MODEL PARAMETERS(E.G., MASS/INERTIA, TIRE CORNER STIFFNESS ON)

↓

$G_{ref\_2nd} = K_d \dfrac{\omega_d^2(1+T_1 s)}{s^2 + 2\zeta_d \omega_d s + \omega_d^2}$ →

DETERMINE THE DESIRED NATURAL
FREQUENCY & DAMPING
FOR THE SECOND-ORDER REFERENCE MODEL

↓

CORNERING STIFFNESS ADAPTATION BASED ON ROAD FRICTION

↓

FILTERED STEERING WHEEL POSITION, STEERING WHEEL RATE, VEHICLE SPEED

↓

$G_{ff\_2nd} = G_{d\_2nd} + G_{d\_2nd}s + K_n \dfrac{\omega_p^2(1+T_2 s)}{s^2 + 2\zeta_p \omega_p s + \omega_p^2}$ →

SOLVE DYNAMIC FEED FORWARD
TRANSFER FUNCTION

↓

$\delta = G_{ff\_2nd}\theta$ →

DETERMINE THE DYNAMIC FEED FORWARD CONTROL COMMAND FOR REAR STEER δ

↓

ADDITION OF FEED FORWARD (STATIC) & FEEDBACK CONTROL

↓

END